# EUROPEAN PATENT APPLICATION

(11) **EP 2 012 396 A1**
(43) Date of publication of application: **07.01.2009**
(21) Application number: 07741564.4
(22) Date of filing: 13.04.2007
(51) Int. Cl.: H01S 3/06

(54) **ASE LIGHT SOURCE**

(30) Priority: 18.04.2006 JP 2006114856
(71) Applicant: CENTRAL GLASS COMPANY, LIMITED, Ube-shi, Yamaguchi 755-0001 (JP)
(72) Inventor: OKAMOTO, Hideyuki c/o Nasu R&D Center Central Glass Cy, Limited, Tochigi 329-2811 (JP); KUBOTA, Yoshinori C/o Nasu R&D Center Central Glass Cy, Limited, Tochigi 329-2811 (JP); TESHIMA, Takuya c/o Nasu R&D Center Central Glass Cy, Limited, Tochigi 329-2811 (JP)
(74) Representative: Thul, Stephan
(86) International application number: PCT/JP2007/058128
(87) International publication number: WO 2007/119807

(57) **Abstract**

There is provided, in a light source having at least an excitation light source, a rare-earth doped, fluoride optical waveguide, a multiplexing means and an optical fiber for output, an ASE light source **characterized in that** an ASE light that has a wavelength shorter than an excitation light and that has been generated by an up-conversion process generated in an inside of the rare-earth doped, optical waveguide is outputted to outside via at least one long-wavelength cut-off device provided inside or outside of an apparatus.

## Description

### TECHNICAL FIELD

The present invention relates to an ASE light source using a rare-earth doped fiber.

### BACKGROUND OF THE INVENTION

In recent years, along with the progress of optical technology, attention centers on the optical measurement using interference of light in various fields such as communication, semiconductor production, strain investigation using fiber sensor, and medical equipment. In such optical measurement, they say it is necessary to have a low coherent light that picks up only the influence due to transmission through or reflection from an object, as interference. For example, reflectometer that measures the reflection position of light connector interior and the like by using interference can make the position resolution of reflection smaller by using a light source having a short coherent length.

Such low coherent light source is widely used also in medical and biological fields such as optical coherence tomography (OCT). As a low coherent light source, ASE light source or SLD light source of 1.55µm band or 1.3µm band, which is a communication wavelength band, is well known. In recent years, efforts are going into shortening the light source wavelength for improving resolution of measurement. For example, they say it is necessary to have a light source of visible to near-infrared region, such as fluorescence microscope for biological measurement use.

As a means for achieving a wide band region, low coherent light source, it is possible to cite the above-mentioned ASE light source using a rare-earth doped fiber. An ASE light source using a rare-earth doped optical fiber is generally used as a light source of 1.55µm band (for example, see Patent Publications 1 to 3).
Patent Publication 1: Japanese Patent Application Publication 9-237930
Patent Publication 2: Japanese Patent Application Publication 2001-111145
Patent Publication 3: Japanese Patent Application Publication 2002-344045

### SUMMARY OF THE INVENTION

It is, however, difficult to generate up-conversion fluorescence, since silica glass, which is a host material of rare-earth doped optical fibers used for these light sources, has a high phonon energy.

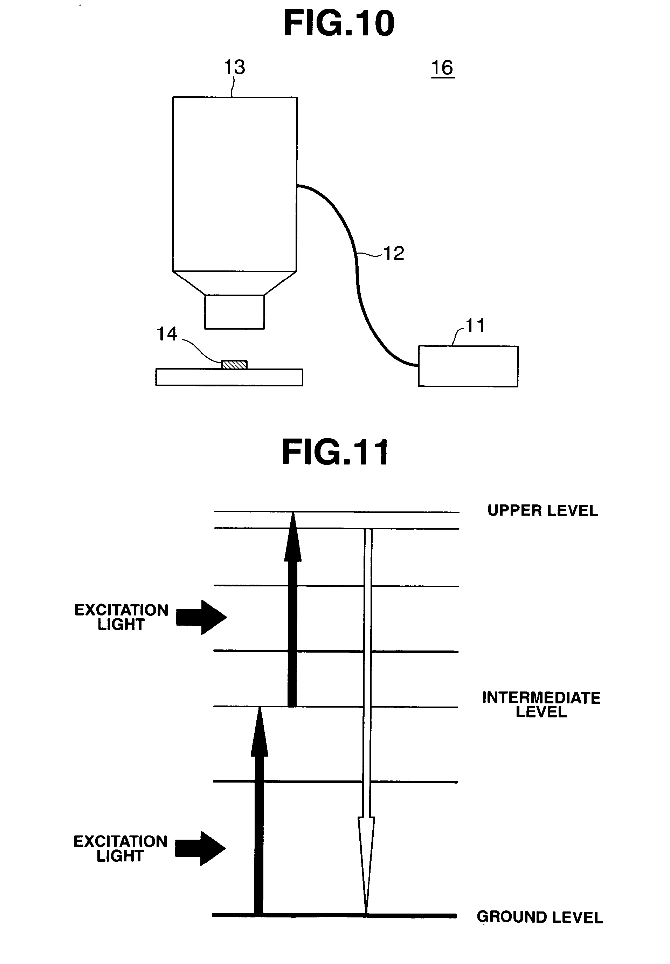

Herein, as shown in Fig. 11, up-conversion refers to a phenomenon in which electrons excited by excitation light from ground level to intermediate level are further excited to upper level by absorbing excitation light. In emission by transition from upper level to ground level, wavelength is shorter than excitation light.

That is, in the case of a rare-earth doped silica fiber in which generation of up-conversion fluorescence is difficult, the wavelength band of ASE light that makes a highly efficient emission possible becomes longer than wavelength of the excitation light. For example, a 1.48µm light source is generally used for excitation of an Er-doped silica optical fiber, and the ASE emission wavelength then becomes 1.55µm band. Therefore, it is difficult to obtain a visible to near-infrared light by existing ASE light sources.

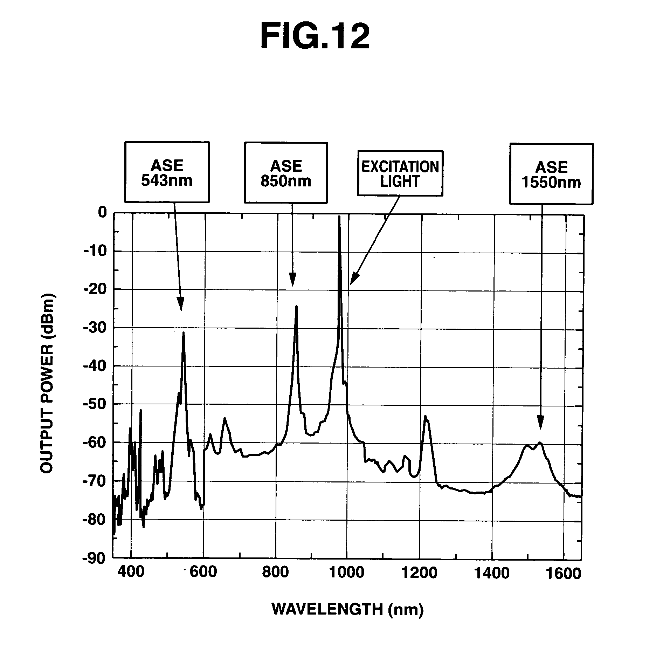

In order to obtain a visible to near-infrared light by up-conversion, there is a method of using a rare-earth doped fiber in which a fluoride glass that is low in phonon energy is used as a host material. Since up-conversion fluorescence is easily generated in a rare-earth doped fluoride fiber, it is possible to easily obtain an emission having a wavelength shorter than the excitation wavelength. For example, an emission spectrum in case that an Er-doped fluoride fiber has been excited at 970nm is shown in Fig. 12. It is understood that ASE lights are obtained by up-conversion at 543nm band and 850nm band, which are shorter than the excitation light in wavelength.

Herein, in case that a person wants to output only an emission of 543nm band, which is visible light, it is necessary in conventional ASE light sources to remove an ASE light of 850nm band, the excitation light (970nm), and an light component of 1550nm band by using a band pass filter. However, in the case of inserting a band pass filter in the path of ASE light, it is necessary to output it once to the space and to convert it to a collimated light. Therefore, Fresnel reflection occurs between collimated lens, filter or fiber end surface and air. Reflection existing in the path of ASE light is possible to form an oscillator to induce laser oscillation. In case that it has oscillated, it becomes a laser light having a coherent property. Therefore, properties as a low coherent light source are considerably deteriorated.

According to the present invention, there is provided, in a light source having at least an excitation light source, a rare-earth doped, fluoride optical waveguide, a multiplexing means and an optical fiber for output, an ASE light source characterized in that an ASE light that has a wavelength shorter than an excitation light and that has been generated by an up-conversion process generated in an inside of the rare-earth doped, optical waveguide is outputted to outside via at least one long-wavelength cut-off device provided inside or outside of an apparatus.

Furthermore, the above ASE light source may be characterized in that an optical waveguide is used in all of the paths from the rare-earth doped optical waveguide to the output optical fiber such that an ASE light is outputted via no air space.

Furthermore, the above ASE light source may be characterized in that an element added into a core of the rare-earth doped fiber comprises at least one selected from the group consisting of La, Ce, Pr, Nd, Sm, Eu, Gd, Tb, Dy, Ho, Er, Tm, Yb, and Lu.

### BRIEF DESCRIPTION OF THE DRAWINGS

Fig. 1 shows an example of structure of a low coherent light source according to the present invention;
Fig. 2 shows a modified example of structure of the low coherent light source of Fig. 1;
Fig. 3 shows a modified example of structure of the low coherent light source of Fig. 1;
Fig. 4 shows a modified example of structure of the low coherent light source of Fig. 1;
Fig. 5 shows a modified example of structure of the low coherent light source of Fig. 1;
Fig. 6 shows an ASE light source according to Example 1 of the present invention;
Fig. 7 shows two emission spectrums in Example 1 of the present invention;
Fig. 8 shows a transmission spectrum of a long-wavelength cut-off device according to Example 1 of the present invention;
Fig. 9 shows an ASE light source according to Example 2 of the present invention;
Fig. 10 shows an apparatus (Example 3) containing a low coherent light source according to the present invention;
Fig. 11 shows an outline of emission by up-conversion process; and
Fig. 12 shows an emission spectrum (corresponding to that of the arrow A of Fig. 7) in case that an Er-doped fluoride fiber has been excited at 970nm.

### DETAILED DESCRIPTION

The present invention can also be used for an applied field of optical transmission such as evaluation and measurement and inspection apparatuses in medical care, as well as communication system in optical communication field.

According to the present invention, it is possible to generate a visible to near-infrared light by using a fluoride fiber having a low phonon energy. Furthermore, it is possible to achieve an ASE light source having a stable light output by cutting off unnecessary wavelengths out of an ASE light of a plurality of wavelengths generated by up-conversion process by a long-wavelength cutting-off device accompanied with no reflection.

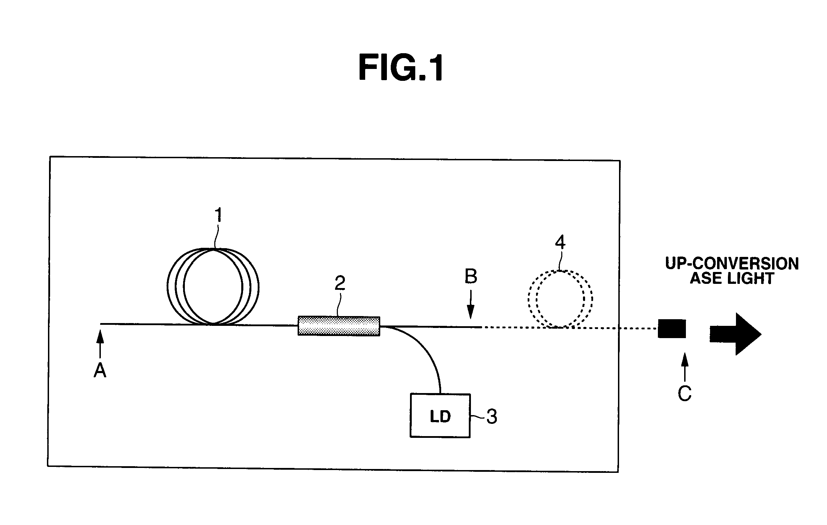

In the following, the present invention is explained in detail. Fig. 1 shows structure of a low coherent light source according to the present invention. It is composed of rare-earth doped optical fiber 1, excitation light/ASE light multiplexing coupler 2, and excitation LD 3.

The excitation light generated by the excitation LD 3 is incident on the rare-earth doped optical fiber 1 through the coupler 2. The ASE light generated in the fiber 1 is outputted in both directions. Of this, the ASE light generated in the direction of the output port C side is outputted from the light source apparatus.

Herein, in the case of obtaining a single-mode light in a desired wavelength band, it can be achieved by appropriately selecting a fiber used for fiber 1 or coupler 2 or cut-off wavelength of the output fiber 4.

Furthermore, it is possible to suppress a light of a wavelength longer than the desired wavelength by giving an appropriate bending loss to the output fiber 4. For example, as a means for suppressing a longer wavelength, it is possible to use an optical fiber, which is described in Japanese Patent Application No. 2005-339672 and Japanese Patent Application No. 2005-266316, which have previously been filed by the present applicant, which has an optical fiber so designed that cut-off wavelength λc satisfies a condition of λc≤0.72×λop+70 (nm) relative to the wavelength band for use λop and that NA is 0.18 or less, which has an optical fiber portion formed by winding a part of the optical fiber by 1/4 rounds or more and at least two optical fiber holding portions, and which is designed to attenuate the wavelength band for use at a predetermined rate with no reflection by changing bending radius of the optical fiber by changing the distance between the optical fiber holding portions.

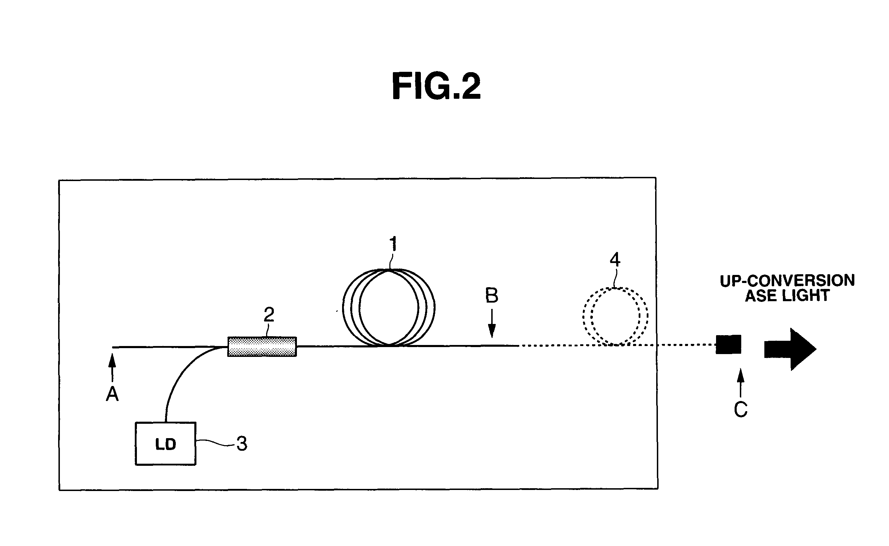

Furthermore, it can take a structure in which the excitation direction has been reversed as shown in Fig. 2. Upon this, since travel direction of the excitation light is the same as output direction of ASE light, the excitation light is outputted in some cases from output port C. Herein, since the desired ASE light is one due to up-conversion process, the wavelength is shorter than that of the excitation light. Therefore, it is also possible to cut off the excitation light having a wavelength longer than the ASE light due to up-conversion process by using an optical device, which is described in Japanese Patent Application No. 2005-339672 and Japanese Patent Application No. 2005-266316, which have previously been filed by the present applicant, which is characterized in that it has an optical fiber so designed that cut-off wavelength λc satisfies a condition of λc≤0.72×λop+70 (nm) relative to the wavelength band for use λop and that NA is 0.18 or less, that it has an optical fiber portion formed by winding a part of the optical fiber by 1/4 rounds or more and at least two optical fiber holding portions, and that the wavelength band for use is attenuated at a predetermined rate with no reflection by changing bending radius of the optical fiber by changing the distance between the optical fiber holding portions.

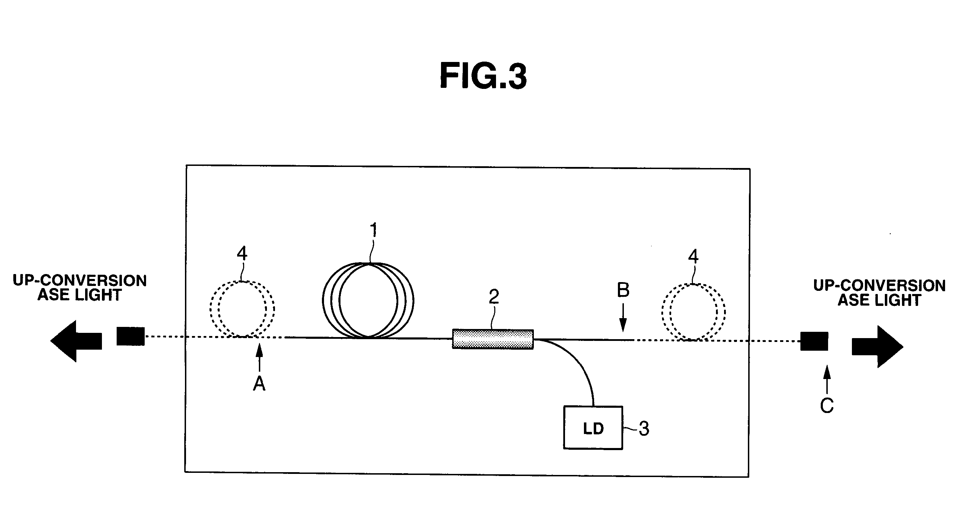

Furthermore, since ASE light is outputted from both directions of the rare-earth doped optical fiber 1, it is also possible to prepare a light source having two output ports as shown in Fig. 3. By changing the excitation power, it is also possible to change the ASE power ratio outputted from two ports.

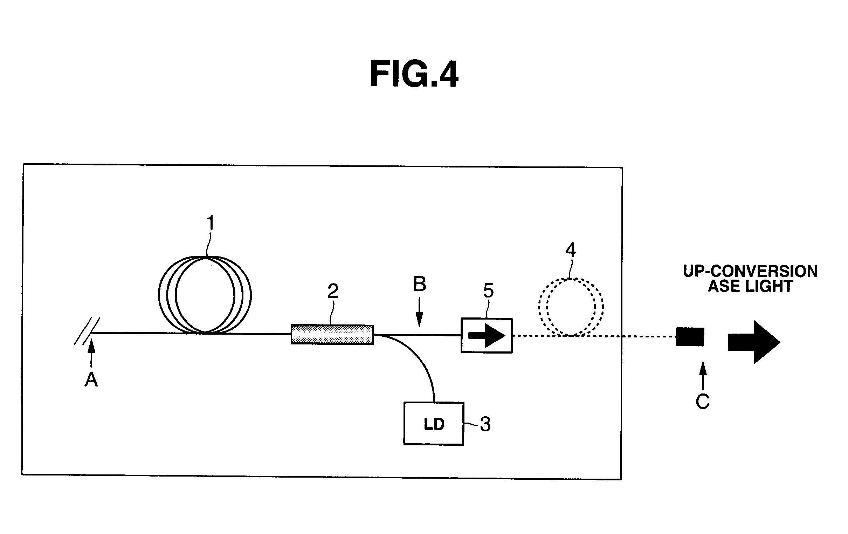

Furthermore, as shown in Fig. 4, it is possible to install a reflection suppressing means such as an oblique grinding of the fiber on the fiber end face A, or to install a reflecting means such as a filter having an appropriate reflectance. Furthermore, it is also possible to stabilize the light source by suppressing the reflective light from the outside of the light source by introducing an isolator 5. Furthermore, it is also possible to dispose a band pass filter that transmits a particular wavelength band at the position of the isolator 5.

It is possible to provide a light source showing low coherent property, since the light source according to the present invention provides emission by spontaneous emission.

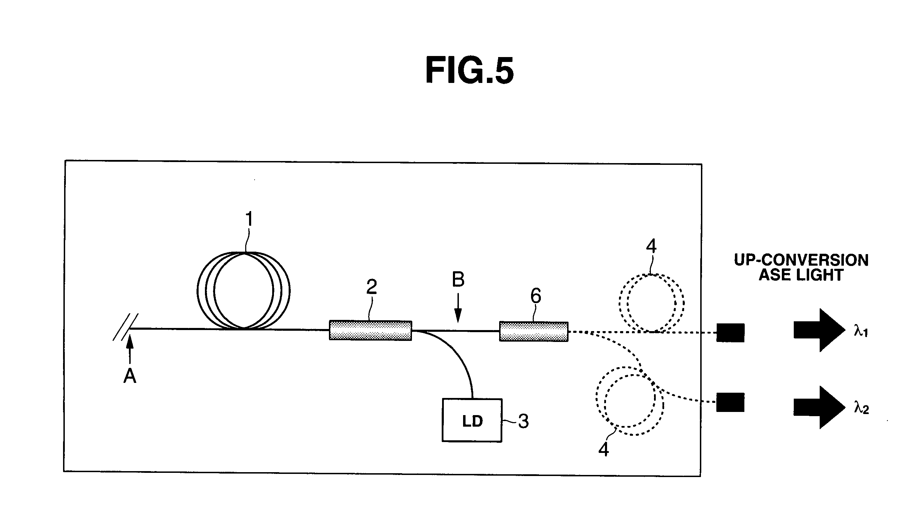

Furthermore, as shown in Fig. 5, it is also possible to separate a plurality of ASE lights of different wavelengths, which have been generated by up-conversion process, by using an optical branching means 6 and to output them from separate ports. Upon this, it is optional to use different fibers relative to respective ASE lights as output fibers 4.

### EXAMPLE 1

In the following, the present invention is explained by citing examples.

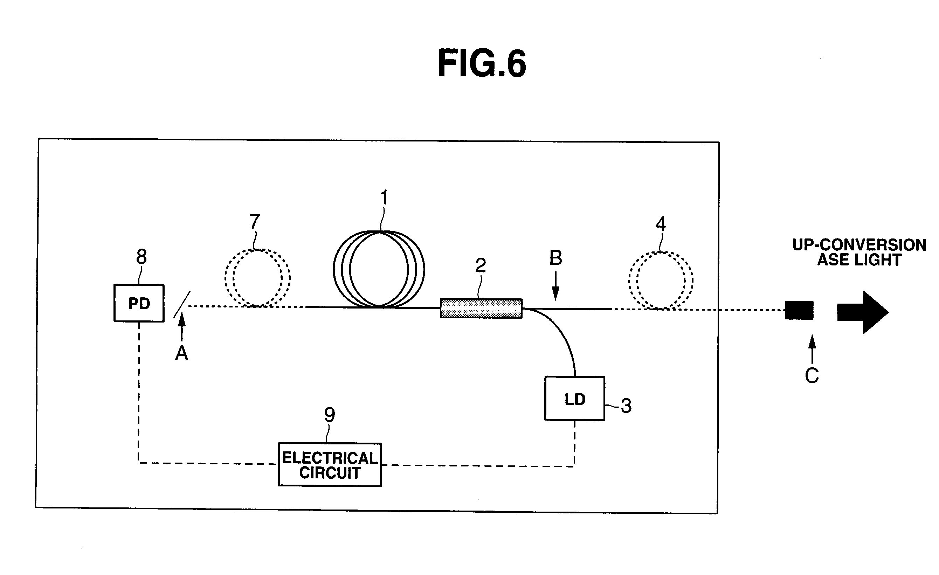

The first example according to the present invention is shown in Fig. 6. In this example, it is composed of erbium-doped fluoride optical fiber 1 (Er: 8000ppm, core diameter: 2.78µm, NA=0.16, and host material: ZBLAN), multiplexing coupler 2 of excitation light/ASE light (fiber used: NA = 0.16, core diameter = 3.5µm), excitation LD 3 (center wavelength: 970nm, output power: 240mW), fibers 4 and 7 (NA = 0.16, core diameter: 2.5µm), power detecting PD 8 (Si diode), and electrical circuit 9.

This example is for the purpose of obtaining an up-conversion ASE light (center wavelength: 543nm) by transition from 4S2/3 to 4I15/2 of Er by single mode output, but it is not limited to this. In order to maintain ASE light power outputted from output port C constant, ASE light outputted from the end A was detected by PD 8, and the excitation current of the excitation LD 3 was controlled by electrical circuit 9 to maintain the detection current of PD 8 constant.

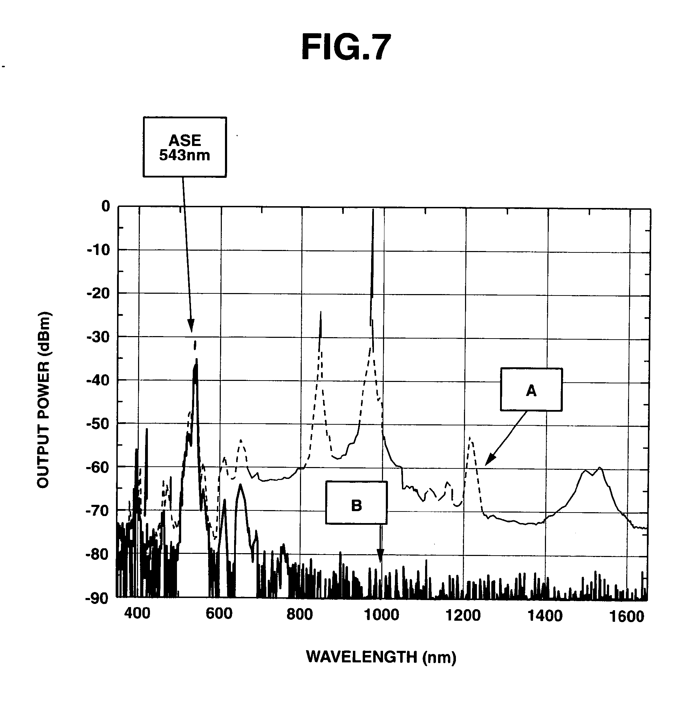

Upon this, the light spectrum outputted from the end A contained not only the desired ASE light (center wavelength: 543nm), but also the excitation light (center wavelength: 970nm) and other ASE components (850nm band) (emission spectrum of the arrow A of Fig. 7).

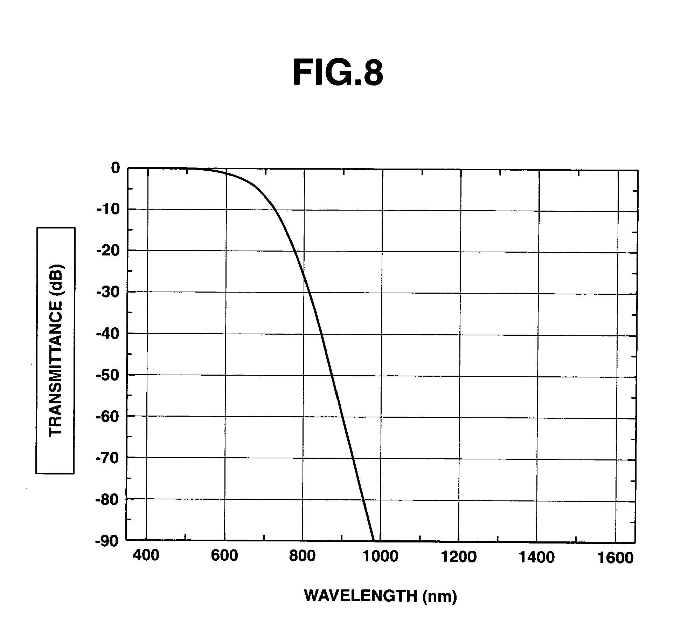

In the following, a mean for extracting only ASE light of 543nm band is described. Herein, a fiber 7 provided with an appropriate bending loss (bending diameter: φ26mm×15 rounds) was inserted in order to make only ASE light of around 543nm incident on PD 8 in Fig. 6. Transmittance of fiber 7 at this time is shown in Fig. 8. By inserting fiber 7 just short of PD 8, only wavelength (emission spectrum of the arrow B of Fig. 7) of ASE light of the desired wavelength (around 543nm) was made to be incident on PD 8 to conduct an output constant control. Similarly, it was possible to obtain only ASE light source of 543nm band from the output port C by providing fiber 4 with an appropriate bending diameter (bending diameter: φ26mm×15 rounds).

Furthermore, optical reflection at end A was suppressed by cleaving the fiber output end to 8° and by inclining perpendicular of the PD surface 15° relative to the output light beam of fiber in order to seek stabilization of ASE output from fiber 1. With this, the ASE light (center wavelength: 543nm) output variation was within ±0.001dB (15 minutes).

Upon this, the degree of light collection is extremely high since the spot for generating ASE light is in the inside of the core of a fiber having a diameter of 2.78µm. That is, it is not necessary to collect light from laser chip to fiber as in semiconductor laser. Therefore, there exists no connection loss. In the present invention, it was possible to obtain a low coherent light with an extremely simple structure.

By changing the rare-earth element to be added to fiber 1, it is possible to change emission wavelength. For example, it is possible to obtain an emission of 715nm, 635nm, 520nm, 490nm and the like by adding praseodymium (Pr). For example, it is possible to obtain an emission of 412nm, 380nm and the like by adding neodymium (Nd). For example, it is possible to obtain an emission of 550nm, 720nm and the like by adding holmium (Ho). For example, it is possible to obtain an emission of 480nm, 450nm and the like by adding thulium (Tm).

### EXAMPLE 2

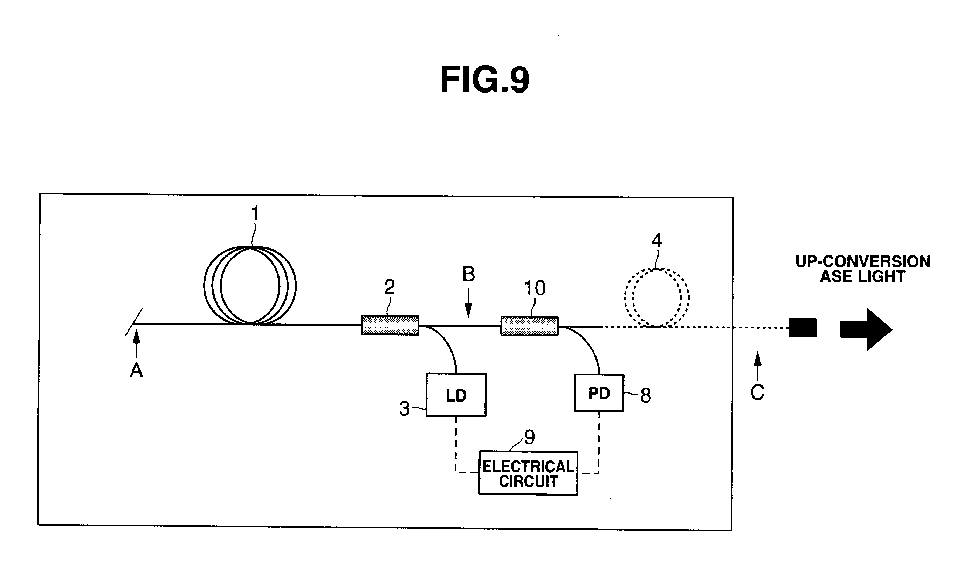

The second example according to the present invention is shown in Fig. 9. In this example, it is composed of erbium-doped fluoride optical fiber 1 (Er: 8000ppm, core diameter: 2.78µm, NA=0.16, and host material: ZBLAN), multiplexing coupler 2 of excitation light/ASE light (fiber used: NA = 0.16, core diameter = 3.5µm), excitation LD 3 (center wavelength: 970nm, output power: 240mW), fiber 4 (NA = 0.16, core diameter: 2.5µm), power detecting PD 8 (Si diode), electrical circuit 9, and branching coupler 10.

Of ASE light generated by fiber 1, a part of light traveling towards output port C is branched by branching coupler 10, and it is monitored by PD 8. With this, it is possible to conduct an output constant control similar to Example 1.

### EXAMPLE 3

The third example according to the present invention is shown in Fig. 10. This example provides an apparatus 16 composed of a low coherent light source 11 according to the present invention, output fiber 12, optical echo microscope 13, and specimen 14. The low coherent light source according to the present invention is lead to optical echo microscope 13 through output fiber 12. Upon this, a low coherent light generated by a rare-earth doped optical fiber in the inside of light source 11 always travels in the fiber. Therefore, it is lead to optical echo microscope with almost no loss. Furthermore, since the output mode from light source 11 is optical fiber, it is possible to dispose light source 11 at any position.

Furthermore, it is possible to arbitrarily dispose a leading end portion of output fiber 12 in the optical echo microscope, too. Furthermore, it is also possible to conduct a fusion splice between the leading end portion of output fiber and a light guiding optical fiber disposed in the optical echo microscope. Thus, it can be connected to another fiber device with no loss.

Herein, apparatus 16 may be an optical scanning image-capturing system. Furthermore, apparatus may be an optical coherence tomography (OCT), a visual field measurement apparatus, an ophthalmologic apparatus for forming cross-sectional image signals of a measurement target part in the measurement target eye, an exposure apparatus using a laser device, a surface distance measurement apparatus using interference, a local probe microscopic apparatus for three-dimensional objects, an interferometer for measuring transmission wavefronts, a polarization microscope, or a photomask inspection apparatus.

## Claims

1. In a light source having at least an excitation light source, a rare-earth doped, fluoride optical waveguide, a multiplexing means and an optical fiber for output, an ASE light source **characterized in that** an ASE light that has a wavelength shorter than an excitation light and that has been generated by an up-conversion process generated in an inside of the rare-earth doped, optical waveguide is outputted to outside via at least one long-wavelength cut-off device provided inside or outside of an apparatus.

2. An ASE light source according to claim 1, which is **characterized in that** an optical waveguide is used for all of paths from the rare-earth doped optical waveguide to the output optical fiber, thereby outputting the ASE light via no air space.

3. An ASE light source according to claims 1 and 2, which is **characterized in that** an element added into a core of the rare-earth doped fiber comprises at least one selected from the group consisting of La, Ce, Pr, Nd, Sm, Eu, Gd, Tb, Dy, Ho, Er, Tm, Yb, and Lu.
